# EUROPÄISCHE PATENTSCHRIFT

(11) **EP 0 559 854 B1**
(45) Veröffentlichungstag und Bekanntmachung des Hinweises auf die Patenterteilung: **10.06.1998**
(21) Anmeldenummer: 92918689.8
(22) Anmeldetag: 01.09.1992
(51) Int. Cl.: F02M 25/08

(54) **VERFAHREN UND VORRICHTUNG ZUM PRÜFEN DER FUNKTIONSFÄHIGKEIT EINER TANKENTLÜFTUNGSANLAGE**
PROCEDURE AND DEVICE FOR CHECKING THE OPERABILITY OF TANK-VENTING SYSTEM
PROCEDE ET DISPOSITIF POUR CONTROLER LA CAPACITE FONCTIONNELLE D'UN SYSTEME DE DEGAZAGE DU RESERVOIR

(30) Priorität: 26.09.1991 DE 4132055
(43) Veröffentlichungstag der Anmeldung: 15.09.1993
(73) Patentinhaber: ROBERT BOSCH GMBH, 70442 Stuttgart (DE)
(72) Erfinder: DENZ, Helmut, D-7000 Stuttgart 1 (DE); BLUMENSTOCK, Andreas, D-7140 Ludwigsburg (DE)
(86) Internationale Anmeldenummer: DE9200725
(87) Internationale Veröffentlichungsnummer: WO9306357

(56) Entgegenhaltungen:
- DE-A- 4 003 751
- DE-C- 4 012 111
- PATENT ABSTRACTS OF JAPAN vol. 12, no. 058 (P-669)20. Februar 1988 & JP,A,62 203 039 ( TOYOTA MOTOR CORP. ) 7. September 1987

## Beschreibung

Das Folgende betrifft ein Verfahren und eine Vorrichtung zum Prüfen der Funktionstüchtigkeit einer Tankentlüftungsanlage an einem Fahrzeug mit Verbrennungsmotor.

### Stand der Technik

Ein derartiges Verfahren und eine entsprechende Vorrichtung mit den Merkmalen der Oberbegriffe der unabhängigen Ansprüche sind bereits aus der DE 40 03 751 bekannt.

In der genannten Schrift wird auch eine Verfahrensvariante angegeben, gemäß der das Absperrventil und das Tankentlüftungsventil geschlossen werden und geprüft wird, ob sich innerhalb einer vorgegebenen Zeitspanne ein vorgegebener überdruck wegen gasendem Kraftstoff aufbaut. Ist dies der Fall, wird das Tankentlüftungsventil geöffnet, und es wird untersucht, ob eine Lambdaregelung am Verbrennungsmotor eine Magerkorrektur ausführen muß. Ist dies der Fall, wird die Tankentlüftungsanlage als funktionsfähig beurteilt.

Die in der genannten Schrift beschriebene Vorrichtung zum Prüfen der Funktionsfähigkeit einer Tankentlüftungsanlage weist Einrichtungen zum Ausführen der vorstehend genannten Schritte auf.

Es hat sich herausgestellt, daß es mit dem vorstehend zitierten Verfahren nicht möglich ist, relativ kleine Löcher in der Tankentlüftungsanlage festzustellen. Es bestand demgemäß das Problem, ein Verfahren und eine Vorrichtung zum Prüfen der Funktionsfähigkeit einer Tankentlüftungsanlage an einem Fahrzeug mit Verbrennungsmotor anzugeben, mit denen es möglich ist, auch relativ kleine Löcher zuverlässig feststellen zu können.

### Darstellung der Erfindung

Das erfindungsgemäpe Verfahren zum Prüfen der Funktionsfähigkeit einer wie oben genannt ausgebildeten Tankentlüftungsanlage an einem Fahrzeug mit Verbrennungsmotor weist folgende Schritte auf:
- überprüfen von Betriebsgrößen des Fahrzeugs einschließlich Motor und Tankentlüftungsanlage und Abbruch der Prüfung, wenn vorgegebene Betriebsgrößenwerte nicht erreicht werden, bei denen eine zuverlässige Aussage zur Funktionsfähigkeit möglich ist;
- Schließen des Absperrventils;
- Öffnen des Tankentlüftungsventils;
- Messen des sich im Tank aufbauenden Unterdrucks;
- Überprüfen von erst während des Prüfverfahrens meßbaren Betriebsgrößen des Fahrzeugs einschließlich Motor und Tankentlüftungsanlage und Abbruch der Unterdruckaufbau-Prüfung, wenn die Betriebsgrößenwerte anzeigen, daß die gemessenen Tankdruckwerte keine zuverlässige Aussage über die Funktionsfähigkeit der Anlage zulassen;
- Beurteilen der Anlage als derzeit nicht funktionsfähig und Beenden des Verfahrens, wenn der Unterdruckaufbaugradient unter einer Schwelle liegt;
- Schließen des Tankentlüftungsventils;
- Messen des sich im Tank abbauenden Unterdrucks;
- Überprüfen von erst während des Prüfverfahrens meßbaren Betriebsgrößen des Fahrzeugs einschließlich Motor und Tankentlüftungsanlage und Abbruch der Unterdruckabbau-Prüfung, wenn die Betriebsgrößenwerte anzeigen, daß die gemessenen Tankdruckwerte keine zuverlässige Aussage über die Funktionsfähigkeit der Anlage zulassen;
- Beurteilen der Anlage als derzeit nicht funktionsfähig, wenn der Unterdruckabbaugradient über einer Schwelle liegt, andernfalls Beurteilen der Anlage als derzeit funktionsfähig; und
- Öffnen des Absperrventils und Beenden des Verfahrens.

Wesentlich für das erfindungsgemäße Verfahren ist, daß es abgebrochen wird, wenn Werte von Betriebsgrößen, die erst während des Verfahrens meßbar sind, anzeigen, daß das Verfahren keine zuverlässige Aussage liefern kann. Daneben können noch in herkömmlicher Weise Werte von Betriebsgrößen überwacht werden, die schon zu Beginn des Verfahrens meßbar sind. Vorzugsweise sind die überwachten Betriebsgrößen insbesondere solche, die in Zusammenhang mit einem Gasen des Kraftstoffs stehen. Dies aus den folgenden Gründen.

Der Aufbau von Unterdruck im Tank wird dadurch hervorgerufen, daß das Absperrventil geschlossen und das Tankentlüftungsventil geöffnet wird. Ist eine Leitung zwischen dem Tankentlüftungsventil und dem Tank verstopft, oder liegt an irgendeiner Stelle ein Leck vor, baut sich Unterdruck nur langsam und/oder in geringem Ausmaß auf. Aus unzureichendem Unterdruckaufbau innerhalb einer vorgegebenen Zeitspanne könnte unmittelbar auf Funktionsunfähigkeit geschlossen werden, wenn nicht eine bedeutsame Störquelle zu ähnlichen Meßeffekten führen könnte. Diese bedeutsame Störquelle ist die Entwicklung von Kraftstoffdampf, sei es durch Wärme oder insbesondere durch Bewegung des Tankinhalts. Wenn der Kraftstoff relativ stark gast oder dampft, baut sich innerhalb einer vorgegebenen Zeitspanne auch dann kein Unterdruck vorgegebener Höhe auf, wenn die Tankentlüftungsanlage dicht und an keiner Stelle verstopft ist. Diese Fehlerquelle ist beim erfindungsgemäßen Verfahren mit großer Zuverlässigkeit vermieden.

Solange das Tankentlüftungsventil geöffnet ist, läßt sich in größerer Menge entwickelter und damit störender Kraftstoffdampf durch eine Magerkorrekturprüfung feststellen. Wie eingangs erwähnt, wird eine Magerkorrekturprüfung auch beim bekannten Verfahren ausgeführt. Dort wird beim Feststellen von Magerkorrektur jedoch auf Funktionsfähigkeit der Anlage geschlossen, während beim erfindungsgemäßen Verfahren dasselbe abgebrochen wird, ohne eine Aussage über den Funktionszustand der Anlage zu treffen.

Sehr kleine Löcher lassen sich insbesondere durch überprüfung des Unterdruckabbaus nach dem Schließen des Tankentlüftungsventils, bei nach wie vor geschlossenem Absperrventil, feststellen. Bei dichter Tankentlüftungsanlage und nichtgasendem Kraftstoff baut sich der Unterdruck relativ langsam ab. Bei gasendem Kraftstoff und/oder einem Loch in der Anlage ist ein relativ schneller Abbau des Unterdrucks zu beobachten. Da die Prüfung auf ein Loch durch gasenden Kraftstoffdampf verfälscht wird, ist das Verfahren wiederum abzubrechen, wenn Gas aus dem Kraftstoff entweicht. Im Gegensatz zum Prüfablauf bei geöffnetem Tankentlüftungsventil ist nun jedoch gasender Kraftstoff nicht durch eine Magerkorrektur feststellbar. Es werden daher Hilfsbetriebsgrößen untersucht, die auf gasenden Kraftstoff schließen lassen, vorzugsweise Schwankungen im Unterdruck oder Anstiege des Unterdruckabbaugradienten. Solche Effekte weisen nämlich auf einen bewegten Tankinhalt, also schwappenden und damit wahrscheinlich gasenden Kraftstoff hin. Zu einer Bewegung des Tankinhalts kommt es immer dann, wenn das zugehörige Fahrzeug eine Beschleunigung erfährt. Sind am Fahrzeug Beschleunigungssensoren für z. B. eine Straßenlagenregelung vorhanden, können auch die Signale von diesen Sensoren verwendet werden, um auf schwappenden zu schließen und das Verfahren zum Prüfen der Dichtheit der Tankentlüftungsanlage gegebenenfalls abzubrechen.

Auf gasenden Kraftstoff weist auch überdruck in der Tankentlüftungsanlage bei geschlossenem Tankentlüftungsventil und geschlossenem Absperrventil hin. Eine überdruckprüfung kann problemlos insbesondere in sogenannten Grundadaptionsphasen erfolgen, in denen das Tankentlüftungsventil ohnehin geschlossen ist. Tritt ein überdruck über einer Schwelle, z.B. 5 hPa, auf, wird gar keine Prüfung auf Lecks, zumindest keine auf kleine Lecks ausgeführt und vorzugsweise wird die Grundadaptionsphase direkt abgebrochen. Nur wenn kein Druck über der Schwelle vorliegt und die überdruckprüfung um weniger als eine vorgegebene Zeitspanne, z.B. 5 Min. zurückliegt, wird die Prüfung auf feine Lecks ausgeführt. Wird ein überdruck erst in einer innerhalb einer vorgegebenen Zeitspanne auf die Feinleck-Prüfung folgenden überdruckprüfung festgestellt wird vorzugsweise so verfahren, daß allenfalls ein Ergebnis anerkannt wird, das ein großes Leck meldete, andere Leckergebnisse aber verworfen werden.

Vorteilhafterweise wird die Prüfung auf Aufbau eines Unterdrucks nur eingeleitet, wenn sich der Motor im Leerlauf befindet und ein Fahrtsignal anzeigt, dap das Fahrzeug steht oder nur langsam fährt. Diese Signalkombination gewährleistet zum einen einen zuverlässigen Unterdruckaufbau (wegen niederem Saugrohrdruck im Leerlauf) und zum anderen wenig Störung durch bewegten und damit gasenden Kraftstoff (wegen im wesentlichen unbewegtem Fahrzeug). Die Prüfung auf das Erfülltsein dieser Bedingungen wird vorzugsweise während des gesamten Prüfablaufs ausgeführt, und das Verfahren wird abgebrochen, sobald diese Bedingungen nicht mehr erfüllt sind. Bei einer vereinfachten Ausführungsform reicht es auch aus, nur eine der beiden Bedingungen zu überprüfen. Jedoch muß insbesondere während der Unterdruckaufbau-Phase gewährleistet sein, daß ein Motor-Betriebszustand vorliegt, bei dem ein für eine Prüfung ausreichend niedriger Saugrohrdruck vorliegt.

Weiterhin ist zu beachten, daß der Druckverlauf nicht nur vom Saugrohrdruck und von eventuell gasendem Kraftstoff abhängt, sondern auch vom Füllstand des Tanks. Ist der Tank weitgehend gefüllt, reicht bei geschlossenem Absperrventil und geschlossenem Tankentlüftungsventil, also bei der Unterdruckabbau-Prüfung bereits eine sehr geringe Menge an Kraftstoffdampf dazu aus, den Unterdruck in kurzer Zeit erheblich abzubauen. Ein hoher Unterdruckabbau-Gradient weist auf ein Loch in der Anlage hin. Das Verfahren ist also bei vollem Tank überempfindlich. Um diese Überempfindlichkeit zu vermeiden, wird das erfindungsgemäpe Verfahren vorzugsweise dann abgebrochen, wenn die Unterdruckaufbau-Prüfung einen hohen Gradienten zeigt. Dieser hohe Gradient beim Unterdruckaufbau weist nämlich auf vollen Tank hin. Stattdessen könnte der Füllstand auch mit einem entsprechenden Sensor überprüft werden und das Verfahren bei zu vollem Tank gar nicht gestartet werden.

Die erfindungsgemäpe Vorrichtung weist Einrichtungen zum Ausführen der Schritte des erfindungsgemäpen Verfahrens auf, nämlich eine Ventilsteuereinrichtung, eine Ablaufsteuerung zum Ansteuern der Ventilsteuereinrichtung, eine Druckgradienten-Prüfeinrichtung als Betriebsbedingungs-Ermittlungseinrichtung und eine Beurteilungseinrichtung.

### Zeichnung

Fig. 1: schematische Darstellung eines Motors mit Saugrohr, Abgaskanal und Katalysator, einer Tankentlüftungsanlage mit Absperrventil an einem Adsorptionsfilter und Drucksensor am Tank und mit einem Steuergerät mit Einrichtungen zur Druckgradientenprüfung und zur Ablaufsteuerung mit Abbruchprüfung zum überprüfen der Funktionsfähigkeit der Tankentlüftungsanlage;
Fig. 2 Diagramm für zeitliche Druckverläufe im Tank abhängig von verschiedenen Betriebszuständen;
Fig. 3: Flupdiagramm für ein Initialisierverfahren;
Fig. 4: Flupdiagramm für ein Verfahren zum überprüfen der Funktionsfähigkeit einer Tankentlüftungsanlage, bei dem während des Unterdruckaufbaus und -abbaus im Tank Abbruchbedingungen überprüft werden;
Fig. 5: Flupdiagramm betreffend das überprüfen von Anfangsbedingungen;
Fig. 6: Flußdiagramm betreffend das überprüfen von Abbruchbedingungen beim Unterdruckaufbau;
Fig. 7: Flußdiagramm betreffend das überprüfen von Abbruchbedingungen beim Unterdruckabbau;
Fig. 8: Flußdiagramm betreffend Fehlerauswertung;
Fig. 9: detailliertes Flußdiagramm zum Ablauf von Fig. 6; und
Fig. 10: detailliertes Flußdiagramm zum Ablauf von Fig. 7.

### Beschreibung von Ausführungsbeispielen

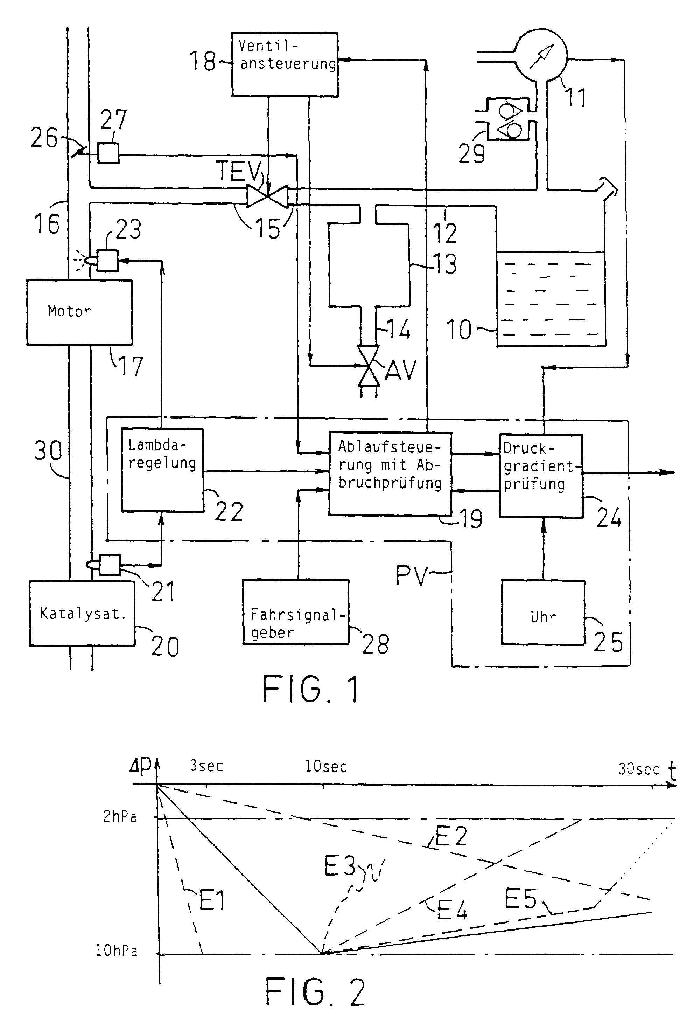

Die in Fig. 1 u. a. dargestellte Tankentlüftungsanlage weist einen Tank 10 mit Differenzdruckmesser 11, ein mit dem Tank über eine Tankanschlußleitung 12 verbundenes Adsorptionsfilter 13 mit Belüftungsleitung 14 mit eingefügtem Absperrventil AV und ein Tankentlüftungsventil TEV auf, das in eine Ventilleitung 15 eingesetzt ist, die das Adsorptionsfilter 13 mit dem Saugrohr 16 eines Verbrennungsmotors 17 verbindet. Das Tankentlüftungsventil TEV und das Absperrventil AV werden von einer Ventilsteuereinrichtung 18 u. a. abhängig vom Signal einer Ablaufsteuereinrichtung 19 angesteuert. Das Tankentlüftungsventil TEV wird auch abhängig vom Betriebszustand des Motors 17 angesteuert, was jedoch in Fig. 1 nicht veranschaulicht ist.

Im Abgaskanal 30 des Motors 17 ist ein Katalysator 20 mit davor befindlicher Lambdasonde 21 angeordnet. Diese gibt ihr Signal an eine Lambdaregeleinrichtung 22, die daraus ein Stellsignal für eine Einspritzeinrichtung 23 im Saugrohr 16 bestimmt.

Eine Beurteilung der Tankentlüftungsanlage als funktionsfähig oder nicht erfolgt mit Hilfe einer Druckgradienten-Prüfeinrichtung 24 in einer Prüfvorrichtung PV, die Teil eines Steuergeräts ist. Die Prüfvorrichtung beinhaltet auch die bereits genannte Ablaufsteuereinrichtung 19, die Lambdaregeleinrichtung 22 sowie eine Uhr 25. Das Steuergerät verfügt über weitere, nicht dargestellte Funktionsgruppen.

Die Ablaufsteuereinrichtung 19 startet einen Ablauf zum Prüfen der Funktionsfähigkeit der Tankentlüftungsanlage, sobald ein mit der Drosselklappe 26 des Motors zusammenwirkender Leerlaufsignalgeber 27 Leerlauf anzeigt und ein Fahrsignalgeber 28 Stillstand oder langsame Fahrt des zugehörigen Fahrzeugs anzeigt. Die Lambdaregeleinrichtung 22 erhält, wie bereits erwähnt, das Ausgangssignal von der Luftzahlsonde 21. Als Ausgangssignale gibt die Prüfvorrichtung PV ein Beurteilungssignal und ein Steuersignal aus. Das Beurteilungssignal wird von der Druckgradienten-Prüfeinrichtung 24 geliefert, und es zeigt an, ob die Tankentlüftungsanlage funktionsfähig ist oder nicht. Das Steuersignal wird von der Ablaufsteuereinrichtung 19 an die Ventilsteuereinrichtung 18 geliefert.

Innerhalb der Prüfvorrichtung wird die Ablaufsteuerung mit Signalen von der bereits genannten Lambdaregeleinrichtung 22, der Druckgradienten-Prüfeinrichtung 24, dem Leerlaufsignal vom Leerlaufsignalgeber 24 und dem Fahrgeschwindigkeitssignal vom Fahrsignalgeber 28 versorgt. Sie gibt das bereits genannte Steuersignal an die Ventilsteuereinrichtung 18 und Informationssignale an die Druckgradienten-Prüfeinrichtung 24 aus. Diese erhält außer den letztgenannten Informationssignalen noch Signale von der Uhr 25 und vom Differenzdrucksensor 11.

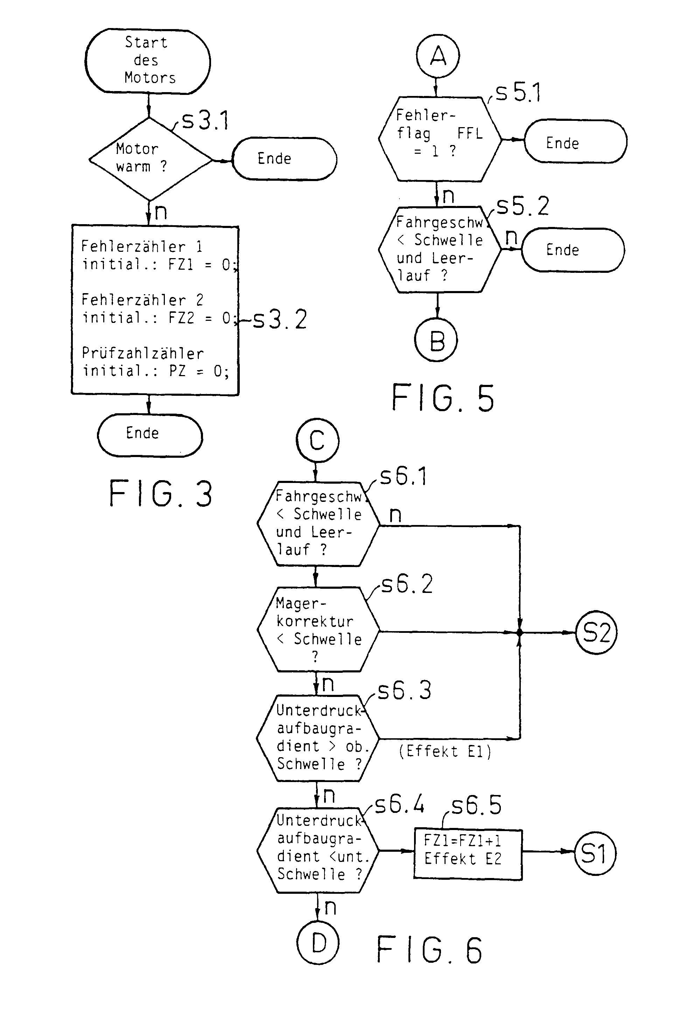

Die so aufgebaute Prüfvorrichtung PV ist so ausgebildet, daß sie ein Verfahren ausübt, wie zunächst im überblick anhand des Diagramms von Fig. 2 und dann ausführlicher anhand der Flußdiagramme der Fig. 3 bis 10 erläutert wird. Es wird dabei eine Überprüfung auf Unterdruckaufbau und -abbau ausgeführt. Damit der Tank 10 bei Funktionsfehlern nicht durch Unterdruck oder auf überdruck zerstört werden kann, ist an ihm ein Schutzventil 29 vorhanden.

Wenn eine Funktionsfähigkeitsprüfung ausgeführt werden soll und der Leerlaufsignalgeber 27 Leerlauf meldet und der Fahrsignalgeber 28 eine Fahrgeschwindigkeit unterhalb einer vorgegebenen Schwelle anzeigt, startet die Ablaufsteuerung 29 ein Prüfverfahren. Hierzu sperrt sie das Absperrventil AV und öffnet das Tankentlüftungsventil TEV. Nun sollte sich innerhalb einer vorgegebenen Zeitspanne ein vorgegebener Mindestunterdruck aufbauen. Beim Ausführungsbeispiel betrug die Zeitspanne, in der mindestens 10 hPa erreicht wurden, maximal 30 sec. Dies galt im Fall eines fast leeren Tanks und einem Tastverhältnis für das Tankentlüftungsventil von 25 %. Abhängig vom Gesamtaufbau der Tankentlüftungsanlage, insbesondere ihrem Volumen, und abhängig vom zeitlichen Verlauf der Ansteuerung des Tankentlüftungsventils können auch ein anderer minimal zu erreichender Druck und eine andere maximal zulässige Zeitspanne vorgegeben werden.

In Fig. 2 ist mit durchgezogener Linie ein Druckabfall eingezeichnet, gemäß dem innerhalb von 10 sec eine Druckminderung um 10 hPa erfolgt. Zwei andere abfallende Linien sind gestrichelt eingezeichnet. Die eine betrifft einen Effekt E1, gemäß dem schon innerhalb von 3 sec die genannten 10 hPa Unterdruck erreicht werden. Dies ist das Zeichen für einen weitgehend gefüllten Tank und eine wahrscheinlich funktionsfähige oder nur mit einem kleinen Loch behaftete Anlage. Ob tatsächlich ein kleines Loch vorliegt, könnte erst bei einer anschließenden Unterdruckabbau-Prüfung festgestellt werden. Da der Unterdruckabbau jedoch bei vollem Tank sehr empfindlich auf Störungen reagiert, wird im Fall eines Verlaufs gemäß dem Effekt E1 gar keine weitere Untersuchung vorgenommen, sondern es wird erst abgewartet, bis der Unterdruckaufbau flacher verläuft, d. h. bis der Tank weniger voll ist.

Die andere, gestrichelte, abfallende Linie betrifft einen Effekt E2 mit sehr geringem Unterdruckaufbaugradienten. Nach 30 sec sind nämlich erst etwa 5 hPa Unterdruck erreicht. Dies ist das Zeichen für eine undichte Anlage, vorausgesetzt der Kraftstoff im Tank gast nicht zu stark. Um die eben beschriebene Fehlerquelle auszuschließen, wird während der öffnungsdauer des Tankentlüftungsventils TEV überprüft, ob die Lambdaregeleinrichtung 22 eine Magerkorrektur ausführen muß. Ist dies der Fall, beendet die Ablaufsteuereinrichtung 19 sofort den Prüfablauf.

Sobald die Unterdruckaufbau-Prüfung abgeschlossen ist und das Prüfverfahren weitergeführt werden soll, wird das Tankentlüftungsventil TEV durch die Ablaufsteuereinrichtung 19 über die Ventilsteuereinrichtung 18 geschlossen. Nun sollte sich der Unterdruck langsam abbauen. Dies ist in Fig. 2 durch die ausgezogene, leicht ansteigende Linie dargestellt. Ist der Unterdruckabbaugradient dagegen steiler, wie durch die ansteigenden, gestrichelten Linien angedeuteten Effekte E3 und E4 in Fig. 2, scheint eine Undichtheit vorzuliegen. Dies steht jedoch nicht eindeutig fest, da der Kraftstoff plötzlich zu gasen beginnen kann, obwohl er dies in der vorausgegangenen Unterdruckaufbauphase nicht oder kaum tat. Plötzliches Gasen ist allerdings nur durch eine Bewegung des Tankinhalts möglich. Diese macht sich vor allem bei ziemlich vollem Tank durch Druckschwankungen erkennbar, also durch den Effekt E3 gemäß Fig. 2. Daneben ist auch ein Effekt E5 möglich, bei dem eine plötzliche Vergrößerung des Druckabbaugradienten auftritt, was nur durch plötzlich gasenden Kraftstoff verurschat sein kann, da ansonsten der Druckabbaugradient immer kleiner werden muß (In Fig. 2 sind der Einfachheit halber lineare statt eigentlich exponentielle Druckverläufe eingezeichnet. Wird einer der Effekte E3 oder E5 festgestellt, wird davon ausgegangen, daß keine zuverlässige Aussage über die Funktionsfähigkeit der Anlage möglich ist, weswegen das Prüfverfahren abgebrochen wird. Liegt dagegen ein relativ schneller Unterdruckabbau gemäß Effekt E4 ohne Schwankungen und Gradientenvergrößerung vor, wird auf ein Leck in der Anlage geschlossen.

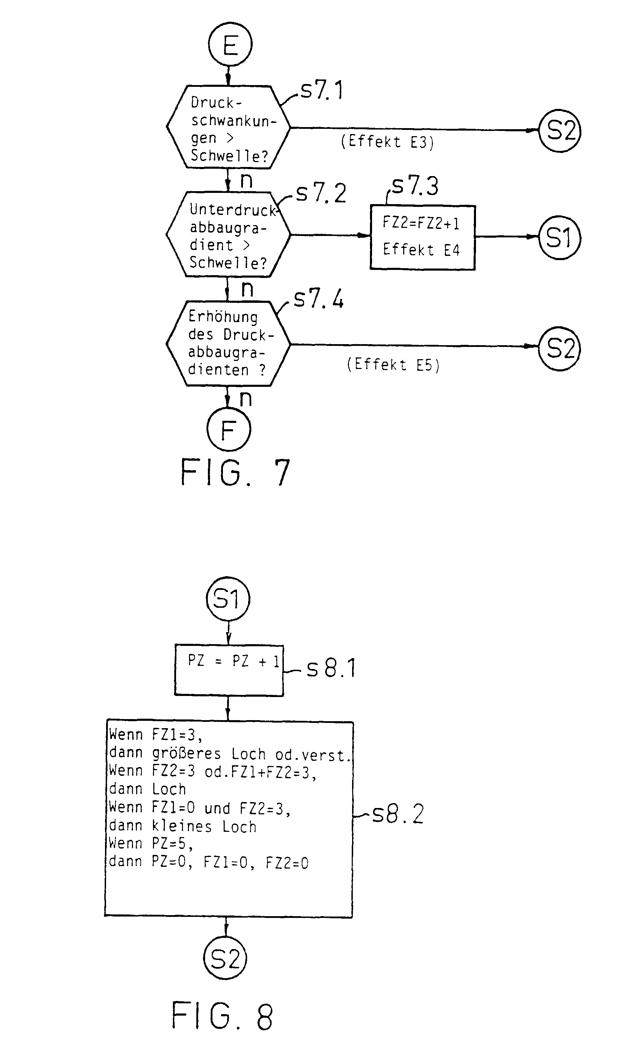

Für das Verfahren, wie es nun anhand der Fig. 3 bis 10 im Detail erläutert wird, sei angenommen, daß das Beurteilungssignal BS, wie es von der Prüfvorrichtung PV ausgegeben wird, anzeigt, ob ein Fehlerflag FFL gesetzt ist (Fehler) oder nicht (kein Fehler). Das Flag wird beim Ausliefern des Fahrzeugs mit der Tankentlüftungsanlage rückgesetzt. Ein solches Rücksetzen erfolgt auch nach jeder Werkstattprüfung, bei der, nach Meldung durch ein gesetztes Flag, ein Fehler in der Tankentlüftungsanlage beseitigt wurde. Das Prüfverfahren zum Feststellen von Fehlern läuft in jedem Betriebszyklus des Motors mehrfach, aber nicht dauernd ab. Wenn n ganz ausgeführte Prüfabläufe mindestens m-mal einen Fehler anzeigen, wird die Anlage als nicht funktionfähig beurteilt, und es wird das Fehlerflag FFL gesetzt. Zu diesem Zweck müssen zu Beginn eines Betriebszyklus verschiedene Zähler initialisiert werden, und mit dem Ende eines jeden Prüfablaufs sind die Zähler auszuwerten (Fig. 8).

Gemäß Fig. 3 wird nach dem Start des Motors 17 in einem Schritt s3.1 überprüft, ob der Motor warm ist. Ist dies nicht der Fall, werden in einem Schritt s3.2 ein erster Fehlerzähler FZ1, ein zweiter Fehlerzähler FZ2 und ein Prüfzahlzähler PZ jeweils auf Null gesetzt. Andernfalls, also bei warmem Motor, wird dagegen sofort das Ende dieses Initialisierverfahrens erreicht, ohne eine Initialisierung vorzunehmen. Dies, damit nicht mit jedem Motorstart innerhalb eines einzigen Betriebszyklus (warmer Motor) alle bisherigen Prüfergebnisse verlorengehen.

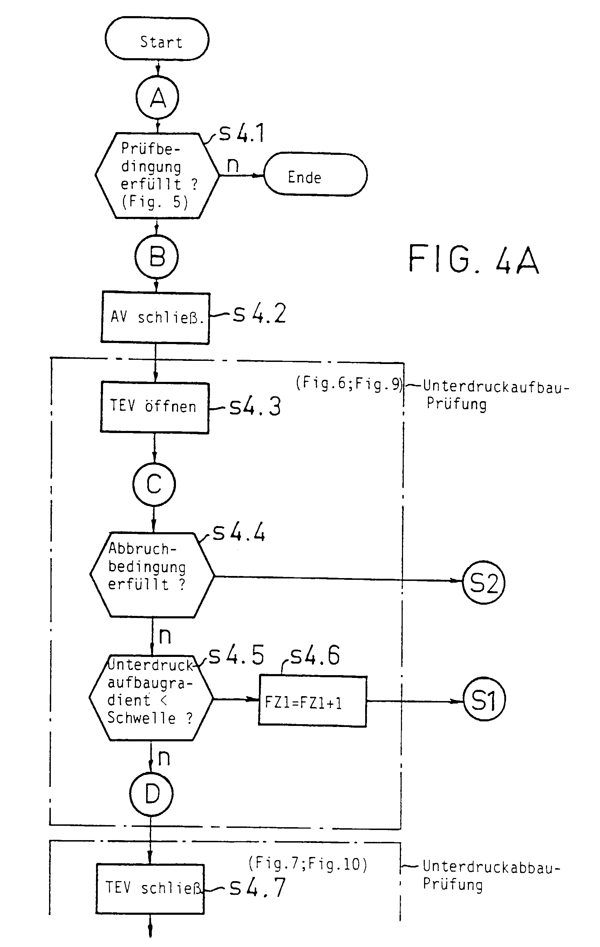

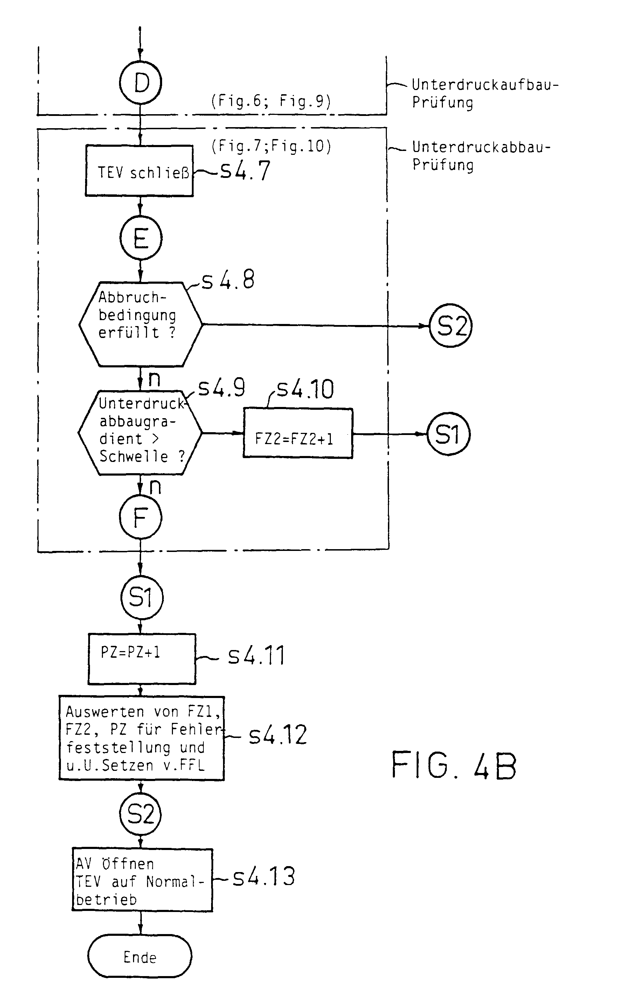

Nach dem Initialisierablauf von Fig. 3 erfolgt mehrfach ein Prüfablauf gemäß Fig. 4. Bei diesem wird über eine Marke A ein Schritt s4.1 erreicht, in dem überprüft wird, ob eine Bedingung erfüllt ist, die eine anschließende Unterdruckaufbauprüfung und -abbauprüfung überhaupt sinnvoll erscheinen läßt. Details hierzu werden in Zusammenhang mit Fig. 5 angegeben. Ist die Bedingung nicht erfüllt, wird das Verfahren sofort beendet. Andernfalls wird über eine Marke B ein Schritt s4.2 erreicht, in dem das Absperrventil AV geschlossen wird. Es schließt sich eine Unterdruckaufbau-Prüfung mit Schritten s4.3 bis s4.6 an. Zunächst wird das Tankentlüftungsventil TEV geöffnet (Schritt s4.3), und dann wird in einem über eine Marke C erreichten Schritt s4.4 überprüft, ob eine Abbruchbedingung erfüllt ist. Ist dies der Fall, wird eine Marke S2 nach dem Ende des Verfahrens erreicht. Andernfalls folgt Schritt s4.5, in dem untersucht wird, ob der Unterdruckaufbaugradient im Tank unter einer Schwelle liegt, ob also der Effekt E2 von Fig. 2 vorliegt. Ist dies der Fall, wird in einem Schritt s4.6 der erste Fehlerzähler FZ1 inkrementiert, und es wird eine Marke S1 nahe dem Ende des Verfahrens, jedoch vor der Marke S2, erreicht. Andernfalls folgt eine Marke D.

Wird die eben genannte Marke D erreicht, schließt sich an diese eine Unterdruckabbau-Prüfung mit Schritten s4.7 bis s4.10 an. In Schritt s4.7 wird das Tankentlüftungsventil TEV wieder geschlossen, woraufhin über eine Marke E der Schritt s4.8 folgt. In diesem wird geprüft, ob eine Abbruchbedingung erfüllt ist. Falls ja, wird wieder die Marke S2 erreicht, andernfalls wird in Schritt s4.9 überprüft, ob der Unterdruckabbaugradient über einer Schwelle liegt, also der Effekt E4 vorliegt. Ist dies der Fall, wird in Schritt s4.10 der zweite Fehler FZ2 inkrementiert, und es wird die Marke S1 erreicht. Andernfalls folgt eine Marke F.

Nach der Unterdruckabbau-Prüfung wird die bereits erwähnte Marke S1 erreicht. Ihr Erreichen zeigt an, dap ein Prüfablauf ohne Abbruch ausgeführt wurde. Daher wird in einem Schritt s4.11 der Prüfzahlzähler inkrementiert. Anschliepend (Schritt s4.12) werden die Zählerstände der Fehlerzähler FZ1 und FZ2 sowie des Prüfzahlzählers PZ für eine Fehlerfeststellung ausgewertet, um das Flag FFL im Fehlerfall zu setzen. Dann folgt die Marke S2, die auch im Abbruchsfall der Unterdruckaufbau-Prüfung oder der Unterdruckabbau-Prüfung erreicht wird. An sie anschliepend wird in einem Schritt s4.13 das Absperrventil AV geöffnet, und das Tankentlüftungsventil TEV wird in Normalbetrieb überführt. Damit endet das Verfahren.

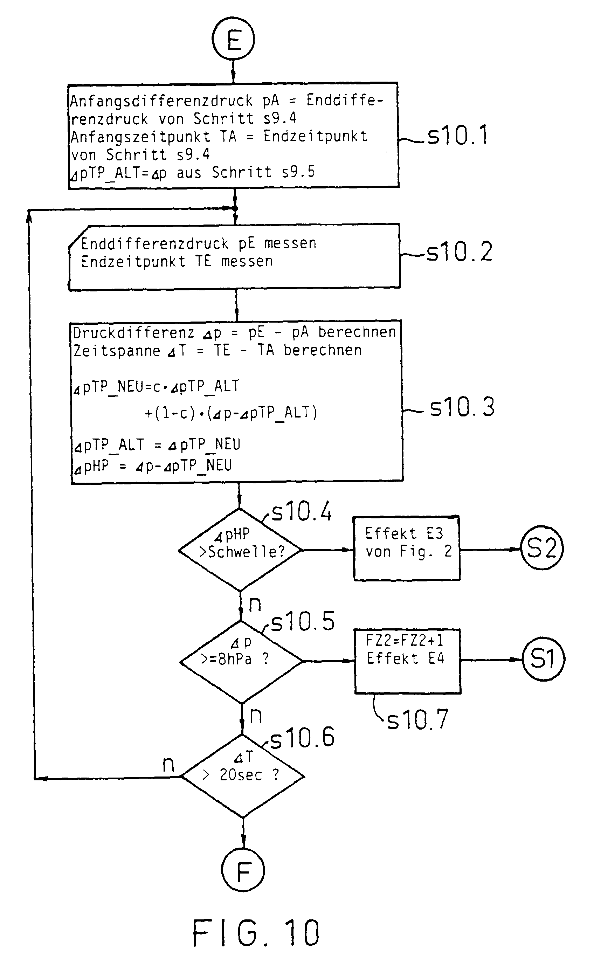

Beim Ausführungsbeispiel umfapt der Schritt s4.1 die Teilschritte s5.1 und s5.2. Es wird nämlich zunächst untersucht, ob das Fehlerflag FFL bereits gesetzt ist. Ist dies der Fall, ist es nicht mehr erforderlich, eine Prüfung auszuführen, da bereits feststeht, daß die Tankentlüftungsanlage nicht voll funktionsfähig ist. Es ist daher unmittelbar das Ende des Verfahrens erreicht. Anstatt diesen Schritt auszuführen, kann z. B. auch so vorgegangen werden, daß in einem Fehlerspeicher Fehlerflags nacheinander abgefragt werden und nur diejenigen Prüfroutinen gestartet werden, zu denen nicht bereits ein eindeutiges Ergebnis vorliegt. Dann würde bei gesetztem Tankentlüftungsanlagen-Fehlerflag keines der hier beschriebenen Verfahren erreicht werden. Liegt jedoch noch kein Fehler vor, wird in Schritt s5.2 überprüft, ob die Fahrgeschwindigkeit unter einer Schwelle liegt und ob Leerlauf vorliegt. Im Leerlauf liegt ein ziemlich starker Unterdruck im Saugrohr 16 vor, was zur Folge hat, daß auch bei fast leerem Tank eine relativ kurze Prüfzeit bei der Unterdruckaufbau-Prüfung erzielbar ist. Außerdem reagiert die Lambdaregelung im Leerlauf sehr empfindlich auf Kraftstoff, der aus der Tankentlüftungsanlage zugeführt wird. Damit läßt sich zuverlässig feststellen, ob der Kraftstoff gast. Ist letzteres der Fall, ist eine Verfälschung des Prüfergebnisses zu befürchten, da nicht klar ist, ob Druckgradienten durch gasenden Kraftstoff oder durch Luft verursacht sind, die durch ein kleines Loch eindringt. Da in diesem Fall keine zuverlässige Aussage möglich ist, wird das Verfahren beendet. In gleicher Richtung zielt die überprüfung der Fahrgeschwindigkeit. Liegt nämlich das vom Fahrsignalgeber 28 gelieferte Fahrgeschwindigkeitssignal über der überprüften Schwelle, ist zu befürchten, daß der Tankinhalt relativ stark bewegt wird und daher der Kraftstoff aufgrund der Bewegung gast. Für besonders zuverlässige Messungen kann gefordert werden, daß das Fahrgeschwindigkeitssignal Null sein soll und daß dieser Wert sogar noch für eine vorgegebene Zeitspanne beibehalten sein soll. Dann steht fest, daß der Tankinhalt ganz ruhig ist. Dies setzt jedoch einen Fahrsignalgeber voraus, der selbst langsamste Geschwindigkeiten erkennen kann. Dies ist in der Praxis jedoch nicht der Fall. Daher ist es in der Praxis sinnvoller, eine gewisse Größe des Fahrgeschwindigkeitssignals zuzulassen und eventuelle Bewegungen des Tankinhalts über andere Maßnahmen zu erkennen. Diesbezüglich wird auf den Ablauf von Fig. 10 verwiesen.

Der Ablauf von Fig. 5, mit dem entschieden wird, ob überhaupt eine Leckprüfung ausgeführt werden soll, kann auch noch einen Schritt mit einer überdruckprüfung enthalten. Bei Abläufen mit einer Grundadaptionsphase erfolgt diese Prüfung vorzugsweise in einer solchen Phase. Zur überdruckprüfung werden das Tankentlüftungsventil und das Absperrventil geschlossen und es wird untersucht, ob der Druck innerhalb einer vorgegebenen Zeitspanne von einigen Sekunden bis wenigen zehn Sekunden über eine Schwelle, z.B. 5 hPa steigt. Wird kein Druck über dieser Schwelle festgestellt und ist die nächste Prüfung auf feine Lecks innerhalb einer vorgegebenen Zeitspanne, z.B. 5 Min. möglich, wird sie auch ausgeführt. Eine Prüfung auf größere Lecks kann auch mit größerer Verzögerung in zuverlässiger Weise erfolgen. Wird die Druckschwelle überschritten wird vorzugsweise sofort Tankentlüftung vorgenommen. Als verschärfende Bedingung kann vorausgesetzt werden, daß Leerlauf und im wesentlichen keine Fahrzeugbewegung vorliegen, damit überhaupt die überdruckprüfung ausgeführt wird, auf die dann bei positivem Ergebnis die Feinleck-Prüfung erfolgen kann.

Zwischen den Marken C und D liegen Schritte s6.1 bis s6.5 gemäß Fig. 6. Da der Inhalt dieser Schritte im Flußdiagramm von Fig. 6 ausführlich angegeben ist und Details zu den Inhalten aller Schritte bereits vorstehend erläutert wurden, wird auch von einem detaillierten Beschreiben von Fig. 6 abgesehen. Entsprechendes gilt für die Verfahrensschritte s7.1 bis s7.4 von Fig. 7, die zwischen den Marken E und F von Fig. 4 ablaufen.

Es sei darauf hingewiesen, daß die Abbruchsbedingungen der Schritte s6.3, s7.1 und s7.4 leicht modifiziert werden können. In Schritt s6.3 kommt es darauf an, einen ziemlich vollen Tank zu erkennen. Dies kann entweder durch Ausnutzen des Effektes E1, wie anhand von Fig. 2 beschrieben, erfolgen, oder es kann das Signal von einem zuverlässigen Tankfüllstandssensor verwendet werden. In den Schritten s7.1 und s7.4 kommt es dagegen darauf an, das Verfahren abzubrechen, wenn gasender Kraftstoff wegen relativ heftiger Kraftstoffbewegung zu befürchten ist. Hier kann statt wie in Fig. 7 angegeben auch so vorgegangen werden, daß abgefragt wird, ob das Fahrzeug Beschleunigungen oberhalb einer Schwelle erfuhr, falls Beschleunigungssensoren vorhanden sind, oder es kann verlangt werden, daß das Fahrzeug innerhalb einer vorgegebenen Zeitspanne stillstand.

Die Schritte s8.1 und s8.2 von Fig. 8 entsprechen den Schritten s4.11 und s4.12 von Fig. 4, wobei jedoch Schritt s8.2 detaillierter ist als Schritt s4.12. Immer wenn fünf Prüfabläufe (Zählerstand PZ = 5) durchlaufen wurden, ohne daß das Fehlerflag FFL gesetzt wurde, werden der Prüfzahlzähler PZ und die Fehlerzähler FZ1 und FZ2 auf null rückgesetzt. Wenn innerhalb dieser Anzahl von Prüfabläufen dreimal ein Fehler bei der Unterdruckaufbau-Prüfung festgestellt wird (FZ1 = 3), zeigt dies an, daß ein größeres Loch in der Anlage vorliegt oder daß diese verstopft ist. Entsprechend kann aus anderen Zählerständen, wie in Schritt s8.2 angegeben, auf andere Fehler geschlossen werden. Es sei darauf hingewiesen, daß es nur bei einem einzigen Fehlerflag FFL keinen Sinn macht, die verschiedenen Fehler zu unterscheiden, da abschließend nur noch festgestellt werden kann, ob ein Fehler auftrat oder nicht. Es reicht dann aus, zu überprüfen, ob die Summe der Zählerstände der beiden Fehlerzähler FZ1 und FZ2 den Wert "3" innerhalb von fünf Prüfdurchläufen erreicht. Werden verschiedene Fehlerfälle unterschieden, sind entsprechend viele Fehlerflags zu verwenden.

Der Ablauf von Schritt s8.2 kann mit Hilfe einer Überdruckprüfung entsprechend der in Zusammenhang mit Fig. 5 erläuterten verfeinert werden. Wird innerhalb einer vorgegebenen Zeitspanne nach der Leckprüfung nicht eine überdruckprüfung mit einem Druck unter einer Schwelle, z.B. wieder 5 hPa, abgeschlossen, werden die Zähler FZ2 und FZ3 wieder dekrementiert, falls sie zuvor inkrementiert wurden. Es müssen dann Flags vorhanden sein, die das zuvor erfolgte Inkrementieren erkennbar machen. Diese Flags werden nach Schritt s8.2 wieder rückgesetzt. Der Wert des Zählers FZ1 kann allerdings erhalten bleiben, da dieser ein Loch oder eine Verstopfung, also sehr deutlich von Störungen unterscheidbare Fehler anzeigt.

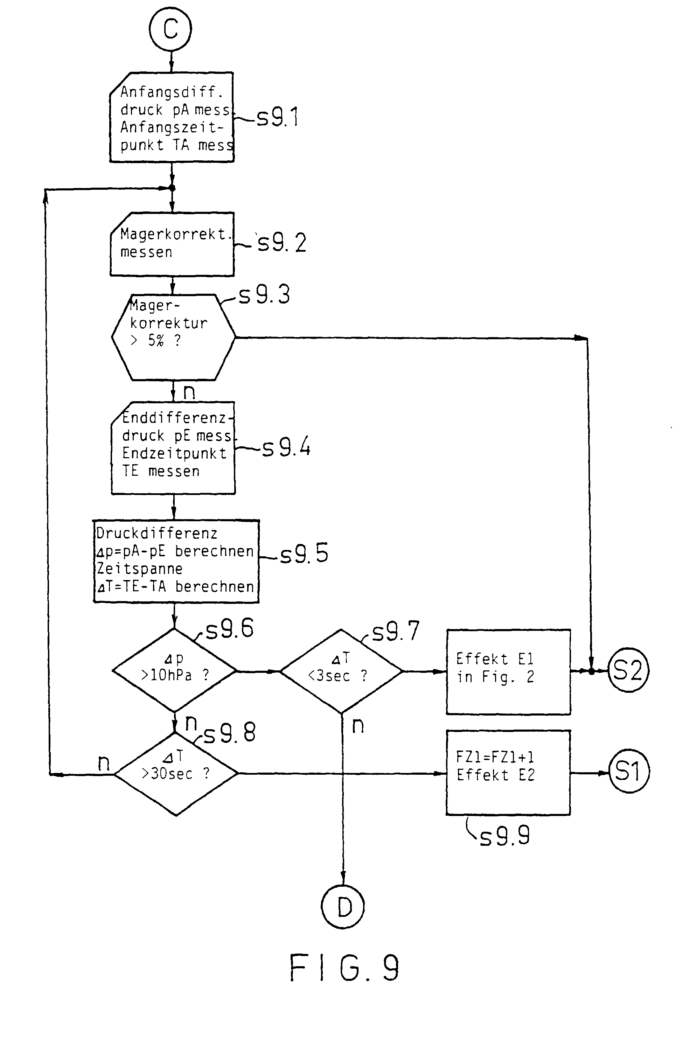

Fig. 9 veranschaulicht ein Ausführungsbeispiel eines Verfahrensablaufs zwischen den Marken C und D in den Fig. 4 und 6 im Detail. In einem Schritt s9.1 werden ein Anfangszeitpunkt TA und ein Anfangsdifferenzdruck pA im Tank gemessen. Anschliepend wird in einem Schritt s9.2, der der erste Schritt einer Schleife ist, gemessen, welche Magerkorrektur die Lambdaregeleinrichtung 22 vornimmt. Stellt sich in einem Schritt s9.3 heraus, daß die Magerkorrektur größer als 5 % ist, wird die Marke S2 erreicht. Andernfalls werden in einem Schritt s9.4 der Endzeitpunkt TE und der Enddifferenzdruck pE gemessen, und in einem Schritt s9.5 werden die Druckdifferenz Δp und die ab dem Messen des Anfangsdifferenzdrucks verstrichene Zeitspanne ΔT berechnet. Als Druckdifferenz Δp wird hierbei der Wert pA - pE verwendet, um einen positiven Wert zu erhalten. Dann läßt sich in einem folgenden Schritt s9.6 unmittelbar überprüfen, ob die Druckdifferenz Δp über 10 hPa liegt. Ist dies der Fall, wird untersucht (Schritt s9.7), ob die Zeitspanne ΔT kleiner als 3 Sekunden ist. Ist dies der Fall, liegt der Effekt E1 von Fig. 2 vor. Andernfalls wird die Unterdruckaufbau-Prüfung durch Erreichen der Marke D positiv abgeschlossen.

Ergibt sich in Schritt s9.6, daß der Differenzdruck Δp die geforderten 10 hPa noch nicht überschritten hat, wird in einem Schritt s9.8 untersucht, ob bereits die maximal zulässige Zeitspanne ΔT von 30 sec überschritten wurde. Ist dies noch nicht der Fall, wird die genannte Schleife ab Schritt s9.2 erneut durchlaufen. Andernfalls wird in einem Schritt s9.9 der erste Fehlerzähler inkrementiert, da Effekt E2 in Fig. 2 festgestellt wurde.

Fig. 10 veranschaulicht ein Ausführungsbeispiel für den Ablauf zwischen den Marken E und F der Fig. 4 und 7 im Detail. Vor Erreichen einer Schleife werden, entsprechend wie in Fig. 9, in einem Schritt s10.1 ein Anfangsdifferenzdruck pA und ein Anfangszeitpunkt TA ermittelt. Dies erfolgt dadurch, daß die entsprechenden Endwerte aus Schritt s9.4 verwendet werden. Außerdem wird ein Tiefpaßwert ΔpTP_ALT für den tiefpaßgemittelten Differenzdruck auf den Wert Δp aus Schritt s9.5 gesetzt. Anschliepend werden in einem Schritt s10.2, als erstem Schritt der genannten Schleife, der Enddifferenzdruck pE und der Endzeitpunkt TE gemessen. In einem Schritt s10.3 erfolgt eine Berechnung mehrerer Werte. Zunächst werden wieder die Druckdifferenz Δp und die Zeitdifferenz ΔT bestimmt. Diesmal wird die Druckdifferenz Δp zu pE - pA berechnet, um wiederum einen positiven Wert zu erhalten. Außerdem wird ein Hochpaßwert ΔpAP der Druckdifferenz Δp bestimmt, der dann wesentlich von Null abweicht, wenn größere Schwankungen in der Druckdifferenz vorliegen. Dieser Hochpaßwert wird durch Abziehen eines Tiefpaßwertes ΔpTP_NEU von der ermittelten Druckdifferenz Δp bestimmt. Der Tiefpaßwert ΔpTP_NEU berechnet sich durch gleitende Mittelung mit Hilfe einer Konstanten c, die so berechnet ist, daß sich eine Zeitkonstante von etwa 20 Millisekunden einstellt. Wird die genannte Schleife mit dem Schritt s10.3 z. B. alle 20 msec abgearbeitet, weist die Konstante c etwa den Wert 0,9 auf. Die Berechnung ergibt sich aus Eintragungen in Schritt s10.3.

In einem Schritt s10.4 wird untersucht, ob die hochpaßgefilterte Druckdifferenz ΔpHP über einer Schwelle liegt. Ist dies der Fall, liegen die Schwingungen gemäß dem Effekt E3 von Fig. 2 vor, weswegen das Verfahren über die Marke S2 abgebrochen wird. Andernfalls wird in einem Schritt s10.5 untersucht, ob eine Druckdifferenz von mindestens 8 hPa vorliegt, d. h. ob der Unterdruck von etwa - 10 hPa auf etwa - 2 hPa abgenommen hat. Ist dies der Fall, liegt ein zu schneller Unterdruckabbau bei nichtgasendem Kraftstoff vor, weswegen auf den Fehler des Effelktes E4 von Fig. 2, also eine undichte Anlage geschlossen wird. Daher wird der zweite Fehlerzähler FZ2 inkrementiert (Schritt s10.7), und die Auswertung gemäß Fig. 8 wird über die Marke S1 erreicht. Wird dagegen in Schritt s10.5 festgestellt, daß der Unterdruckabbau noch nicht allzu stark war, wird in einem Schritt s10.6 überprüft, ob bereits eine Zeitdifferenz ΔT von mehr als 20 sec abgelaufen ist. Ist dies nicht der Fall, wird die Schleife mit den Schritten s10.2 bis s10.7 erneut abgearbeitet. Andernfalls wird die Marke F erreicht, was anzeigt, daß die Unterdruckabbau-Prüfung ohne Abbruch und Fehlerfeststellung durchlaufen wurde.

Es hat sich im übrigen als zweckmäßig erwiesen, wenn auch andere Prüfungen als die TE-Diagnose abgebrochen werden, wenn die gemessenen Tankdruckwerte keine zuverlässige Aussage über die Funktionsfähigkeit der Anlage zulassen.

Dies vor folgendem Hintergrund: Die Schwapperkennung soll nicht nur die TE-Diagnose, sondern z.B. auch die Aussetzererkennung ausblenden (Erkennung von Schlechtwegstrecke).

Wesentlich für alle vorstehend beschriebenen Varianten, wie auch noch für weitere, hier nicht angegebene, ist, daß die Prüfung auf Funktionsfähigkeit immer dann abgebrochen wird, wenn ein Gasen des Kraftstoffs festgestellt oder zumindest vermutet wird. Dadurch wird gewährleistet, daß auch sehr kleine Lecks zuverlässig festgestellt werden können.

## Patentansprüche

1. Verfahren zum Prüfen der Funktionsfähigkeit einer Tankentlüftungsanlage an einem Fahrzeug mit Verbrennungsmotor (17), welche Tankentlüftungsanlage über einen Tank (10) mit Tankdrucksensor (11), ein Adsorptionsfilter (13), das mit dem Tank über eine Tankanschlußleitung (12) verbunden ist und eine durch ein Absperrventil (AV) verschließbare Belüftungsleitung (14) aufweist, und ein Tankentlüftungsventil (TEV) in einer Ventilleitung (15) besitzt, die das Adsorptionsfilter mit dem Saugrohr (16) der Brennkraftmaschine verbindet, mit folgenden Schritten:
- Überprüfen von Betriebsgrößen des Fahrzeugs einschließlich Motor und Tankentlüftungsanlage und Abbruch des Verfahrens, wenn vorgegebene Betriebsgrößenwerte nicht erreicht werden, bei denen eine zuverlässige Aussage von Funktionsfähigkeit möglich ist,
- Schließen des Absperrventils,
- Öffnen des Tankentlüftungsventils,
- Messen des sich im Tank aufbauenden Unterdrucks und
- Beurteilen der Funktionsfähigkeit der Tankentlüftungsanlage auf Grundlage des gemessenen Tankdrucks,
- Beurteilen der Anlage als derzeit nicht funktionsfähig und Beenden des Verfahrens, wenn der Unterdruckaufbaugradient unter einer Schwelle liegt,
- Schließen des Tankentlüftungsventils
- Messen des sich im Tank aufbauenden Unterdrucks,
- Beurteilen der Anlage als derzeit nicht funktionsfähig, wenn der Unterdruckabbaugradient über einer Schwelle liegt, andernfalls Beurteilen der Anlage als derzeit funktionsfähig, und
- Öffnen des Absperrventils und Beenden des Verfahrens, gekennzeichnet durch folgende Schritte:
- Überprüfen von erst während des Prüfverfahrens meßbaren Betriebsgrößen des Fahrzeugs einschließlich Motor und Tankentlüftungsanlage und Abbruch des Verfahrens, wenn die Betriebsgrößenwerte anzeigen, daß die gemessenen Tankdruckwerte keine zuverlässige Aussage über die Funktionsfähigkeit der Anlage zulassen.

2. Verfahren nach Anspruch 1, dadurch gekennzeichnet, daß der Schritt zum Überprüfen der erst während des Prüfverfahrens meßbaren Betriebsgrößen bei geöffnetem Tankentlüftungsventil und zum Abbrechen der Prüfung folgende Unterschritte umfaßt:
- Messen der Nagerkorrektur des Motors und
- Abbrechen der Prüfung, wenn die Magerkorrektur über einer vorgegebenen Schwelle liegt.

3. Verfahren nach einem der Ansprüche 1 oder 2, dadurch gekennzeichnet, daß der Schritt zum Überprüfen von erst während des Prüfverfahrens meßbaren Betriebsgrößen bei geöffnetem Tankentlüftungsventil und zum Abbrechen der Prüfung folgende Unterschritte umfaßt:
- Bestimmen des Druckaufbaugradienten und
- Abbrechen der Prüfung, wenn der Druckaufbaugradient über einer Schwelle liegt.

4. Verfahren nach einem der Ansprüche 1 bis 3, dadurch gekennzeichnet, daß der Schritt zum Überprüfen von Betriebsgrößen bei geöffnetem Tankentlüftungsventil und zum Abbrechen des Verfahrens folgende Unterschritte umfaßt:
- Messen eines Fahrsignals und
- Abbrechen des Verfahrens, wenn die Fahrgeschwindigkeit eine Schwelle überschreitet.

5. Verfahren nach einem der Ansprüche 1 bis 4, dadurch gekennzeichnet, daß der Schritt zum Überprüfen von erst während des Prüfverfahrens meßbaren Betriebsgrößen bei geschlossenem Tankentlüftungsventil und zum Abbrechen des Verfahrens folgende Unterschritte umfaßt:
- Bestimmen von Änderungen des Unterdrucks und
- Abbrechen des Verfahrens, wenn die Änderungen über einer Schwelle liegen.

6. Verfahren nach einem der Ansprüche 1 bis 5, dadurch gekennzeichnet, daß der Schritt zum Überprüfen von erst während des Prüfverfahrens meßbaren Betriebsgrößen bei geschlossenem Tankentlüftungsventil und zum Abbrechen des Verfahrens folgende Unterschritte umfaßt:
- Bestimmen von Änderungen des Unterdruckabbaugradienten und
- Abbrechen des Verfahrens, wenn der Gradient zunimmt.

7. Verfahren nach einem der Ansprüche 1 bis 6, dadurch gekennzeichnet, daß in einer Phase mit geschlossenem Tankentlüftungsventil außer einer Prüfphase eine Überdruckprüfung bei zusätzlich geschlossenem Absperrventil erfolgt und nur dann, wenn bei dieser Prüfung nur ein überdruck unter einer Schwelle festgestellt wurde und sie um weniger als eine vorgegebene Zeitspanne zurückliegt eine Prüfung gemäß einem der Ansprüche 1 bis 7 ausgeführt wird.

8. Verfahren nach einem der Ansprüche 1 bis 7, dadurch gekennzeichnet, daß in einer Phase mit geschlossenem Tankentlüftungsventil nach einer Prüfphase eine Überdruckprüfung bei zusätzlich geschlossenem Absperrventil erfolgt und nur dann, wenn bei dieser Prüfung nur ein überdruck unter einer Schwelle festgestellt wurde und sie um weniger als eine vorgegebene Zeitspanne auf die Prüfphase folgt, das Ergebnis der Prüfung gemäß einem der Ansprüche 1 bis 7 voll anerkannt wird, andernfalls nur ein Ergebnis, das ein großes Leck anzeigt anerkannt wird.

9. Vorrichtung zum Prüfen der Funktionsfähigkeit einer Tankentlüftungsanlage an einem Fahrzeug mit Verbrennungsmotor (17), welche Tankentlüftungsanlage über einen Tank (10) mit Tankdrucksensor (11), ein Adsorptionsfilter (13), das mit dem Tank über eine Tankanschlußleitung (12) verbunden ist und eine durch ein Absperrventil (AV) verschließbare Belüftungsleitung (14) aufweist, und ein Tankentlüftungsventil (TEV) in einer Ventilleitung (15) besitzt, die das Adsorptionsfilter mit dem Saugrohr (16) der Brennkraftmaschine verbindet, mit Mitteln zum:
- Überprüfen von Betriebsgrößen des Fahrzeugs einschließlich Motor und Tankentlüftungsanlage und zum Abbrechen des Verfahrens, wenn vorgegebene Betriebsgrößenwerte nicht erreicht werden, bei denen eine zuverlässige Aussage von Funktionsfähigkeit möglich ist,
- Mitteln zum Schließen des Absperrventils,
- Mitteln zum Öffnen des Tankentlüftungsventils,
- Mitteln zum Messen des sich im Tank aufbauenden Unterdrucks und
- Mitteln zum Beurteilen der Funktionsfähigkeit der Tankentlüftungsanlage auf Grundlage des gemessenen Tankdrucks,
- welche Mittel die Anlage als derzeit nicht funktionsfähig beurteilen und die Diagnose beenden, wenn der Unterdruckaufbaugradient unter einer Schwelle liegt,
- Mitteln, die das Tankentlüftungsventil schließen
- Mitteln, die den sich im Tank aufbauenden Unterdrucks messen,
- Mitteln zum Beurteilen der Anlage als derzeit nicht funktionsfähig, wenn der Unterdruckabbaugradient über einer Schwelle liegt, andernfalls Beurteilen der Anlage als derzeit funktionsfähig, und
- Mitteln, die das Absperrventil öffnen und das Verfahren beenden, gekennzeichnet durch:
- Mittel zum Überprüfen von erst während des Prüfverfahrens meßbaren Betriebsgrößen des Fahrzeugs einschließlich Motor und Tankentlüftungsanlage und Mittel zum Abbruch des Verfahrens, wenn die Betriebsgrößenwerte anzeigen, daß die gemessenen Tankdruckwerte keine zuverlässige Aussage über die Funktionsfähigkeit der Anlage zulassen.

10. Vorrichtung nach Anspruch 9, dadurch gekennzeichnet, daß die Betriebsbedingungs-Ermittlungseinrichtung eine Lambda-Regeleinrichtung (22), einen Leerlaufsignalgeber (27) und einen Fahrsignalgeber (28) aufweist und die Ablaufsteuerung (19) so ausgebildet ist, daß sie den Prüfablauf abbricht, wenn entweder bei geschlossenem Tankentlüftungsventil die Magerkorrektur über einer Schwelle liegt oder kein Leerlauf vorliegt und der Fahrsignalgeber eine Fahrgeschwindigkeit oberhalb einer Schwelle meldet.

11. Verfahren nach Anspruch 1, dadurch gekennzeichnet, daß im Falle einer Überwachung des Verbrennungsmotors auf Verbrennungsausetzer auch diese Überwachung abgebrochen wird, wenn die gemessenen Tankdruckwerte keine zuverlässige Aussage über die Funktionsfähigkeit der Anlage zulassen.

## Claims

1. Procedure for testing the serviceability of a tank venting system on a vehicle with an internal combustion engine (17), which tank venting system has a tank (10) with tank pressure sensor (11), an adsorption filter (13), which is connected to the tank via a tank connecting line (12) and has a ventilation line (14) that can be closed by a shut-off valve (AV), and has a tank venting valve (TEV) in a valve line (15) that connects the adsorption filter to the intake pipe (16) of the internal combustion engine, the procedure having the following steps:
- Checking operating variables of the vehicle, including engine and tank venting system, and breaking off the procedure if predefined operating variable values, at which a reliable statement of serviceability is possible, are not reached,
- closing the shut-off valve,
- opening the tank venting valve,
- measuring the negative pressure building up in the tank and
- assessing the serviceability of the tank venting system on the basis of the measured tank pressure,
- assessing the system as not serviceable at that time and terminating the procedure if the negative pressure build-up gradient lies below a threshold,
- closing the tank venting valve
- measuring the negative pressure building up in the tank,
- assessing the system as not serviceable at that time if the negative pressure decay gradient lies above a threshold, otherwise assessing the system as serviceable at that time, and
- opening the shut-off valve and terminating the procedure,
characterized by the following steps:
- checking operating variables of the vehicle, including the engine and tank venting system, that can only be measured during the test procedure, and breaking off the procedure if the operating variable values indicate that the measured tank pressure values do not permit a reliable statement about the serviceability of the system.

2. Procedure according to Claim 1, characterized in that the step of checking the operating variables that can only be measured during the test procedure with the tank venting valve open, and of breaking off the testing, comprises the following sub-steps:
- measuring the lean-combustion correction of the engine and
- breaking off the test if the lean-combustion correction lies above a predefined threshold.

3. Procedure according to either of Claims 1 and 2, characterized in that the step of checking the operating variables that can only be measured during the test procedure with the tank venting valve open, and of breaking off the testing, comprises the following sub--steps:
- determining the pressure build-up gradient and
- breaking off the test if the pressure build-up gradient lies above a threshold.

4. Procedure according to one of Claims 1 to 3, characterized in that the step of checking the operating variables with the tank venting valve open, and of breaking off the procedure, comprises the following sub-steps:
- measuring a driving signal and
- breaking off the procedure if the driving speed exceeds a threshold.

5. Procedure according to one of Claims 1 to 4, characterized in that the step of checking the operating variables that can only be measured during the test procedure with the tank venting valve closed, and of breaking off the procedure, comprises the following sub-steps:
- determining changes in the negative pressure and
- breaking off the procedure if the changes lie above a threshold.

6. Procedure according to one of Claims 1 to 5, characterized in that the step of checking the operating variables that can only be measured during the test procedure with the tank venting valve closed, and of breaking off the procedure, comprises the following sub-steps:
- determining changes in the negative pressure decay gradient and
- breaking off the procedure if the gradient increases.

7. Procedure according to one of Claims 1 to 6, characterized in that in a phase with the tank venting valve closed, in addition to a testing phase, a positive-pressure test is performed with the shut-off valve additionally closed, and only if during this test only a positive pressure below a threshold is detected and it persists for less than a predefined time interval is a test according to one of Claims 1 to 7 carried out.

8. Procedure according to one of Claims 1 to 7, characterized in that in a phase with the tank venting valve closed, following a testing phase a positive-pressure test is performed with the shut-off valve additionally closed and only if during this test only a positive pressure below a threshold is detected and it follows the testing phase by less than a predefined time interval is the result of the test according to one of Claims 1 to 7 completely recognised, otherwise only a result that a large leak is indicated is recognised.

9. Device for testing the serviceability of a tank venting system on a vehicle with an internal combustion engine (17), which tank venting system has a tank (10) with tank pressure sensor (11), an adsorption filter (13), which is connected to the tank via a tank connecting line (12) and has a ventilation line (14) that can be closed by a shut-off valve (AV), and has a tank venting valve (TEV) in a valve line (15) that connects the adsorption filter to the intake pipe (16) of the internal combustion engine, the device having means for:
- checking operating variables of the vehicle, including engine and tank venting system, and breaking off the procedure if predefined operating variable values, at which a reliable statement of serviceability is possible, are not reached,
- means for closing the shut-off valve,
- means for opening the tank venting valve,
- means for measuring the negative pressure building up in the tank and
- means for assessing the serviceability of the tank venting system on the basis of the measured tank pressure,
- which means assess the system as not serviceable at that time and terminate the diagnosis if the negative pressure build-up gradient lies below a threshold,
- means which close the tank venting valve,
- means which measure the negative pressure building up in the tank,
- means for assessing the system as not serviceable at that time if the negative pressure decay gradient lies above a threshold, otherwise assessing the system as serviceable at that time, and
- means which open the shut-off valve and terminate the procedure, characterized by:
- means for checking operating variables of the vehicle, including the engine and tank venting system, that can only be measured during the test procedure, and means for breaking off the procedure if the operating variable values indicate that the measured tank pressure values do not permit a reliable statement about the serviceability of the system.

10. Device according to Claim 9, characterized in that the operating condition ascertaining device has a lambda control device (22), an idling signal transmitter (27) and a driving signal transmitter (28), and the sequence controller (19) is designed in such a way that it breaks off the test sequence if either, with the tank venting valve closed, the lean-combustion correction lies above a threshold or there is no idling present and the driving signal transmitter reports a driving speed above a threshold.

11. Procedure according to Claim 1, characterized in that, in the event of monitoring the internal combustion engine for misfires, this monitoring is also broken off if the measured tank pressure values do not permit a reliable statement about the serviceability of the system.

## Revendications

1. Procédé pour contrôler l'aptitude à fonctionner d'un système de dégazage de réservoir sur un véhicule équipé d'un moteur à combustion interne (17), lequel système de dégazage de réservoir présente au dessus d'un réservoir (10) avec un capteur de pression de réservoir (11), un filtre d'adsorption (13), qui est relié au réservoir au moyen d'une conduite de raccordement (12) et une conduite de ventilation (14) que l'on peut fermer par une vanne d'obturation (AV), et possède une soupape de dégazage de réservoir (TEV) dans une conduite (15), qui relie le filtre d'adsorption au tuyau d'aspiration (16) du moteur à combustion interne, avec les séquences suivantes :
- contrôle des paramètres de fonctionnement du véhicule, y compris du moteur et du système de dégazage du réservoir et fin anormale du processus, quand les paramètres de fonctionnement définis au préalable ne sont pas atteints, paramètres grâce auxquels il est possible d'obtenir une prévision fiable quant à l'aptitude du système à fonctionner,
- fermeture de la soupape d'obturation,
- ouverture de la soupape de dégazage du réservoir,
- mesure de la dépression qui s'établit dans le réservoir
- appréciation de l'aptitude du système de dégazage du réservoir à fonctionner sur la base de la pression mesurée dans le réservoir,
- estimation que le système n'est pas capable de fonctionner à ce moment là et fin du processus, quand le gradient de développement de la dépression se trouve en dessous d'un seuil,
- fermeture de la vanne de dégazage du réservoir,
- mesure de la dépression qui se développe dans le réservoir,
- estimation que le système n'est pas capable de fonctionner à ce moment là, quand le gradient de réduction de la dépression se trouve au dessus d'un seuil, sinon estimation que le système est susceptible de fonctionner à ce moment là, et
- ouverture de la vanne d'obturation et fin du processus,
caractérisé par les séquences suivantes :
- contrôle des paramètres de fonctionnement du véhicule que l'on peut seulement mesurer pendant le processus de contrôle, y compris de ceux du moteur et du système de dégazage du réservoir, et fin anormale du processus, quand les valeurs des paramètres de fonctionnement indiquent que les valeurs mesurées de la pression dans le réservoir ne permettent pas de faire de prévision fiable au sujet de l'aptitude du système à fonctionner.

2. Procédé selon la revendication 1,
caractérisé en ce que
la séquence, servant à contrôler les paramètres de fonctionnement que l'on peut seulement mesurer pendant le processus de contrôle, quand la vanne de dégazage du réservoir est ouverte et à arrêter anormalement le contrôle, comprend les sous-séquences suivantes :
- mesure de la correction du mélange pauvre du moteur,
- arrêt anormal du contrôle, quand la correction du mélange pauvre se trouve au dessus d'un seuil défini au préalable.

3. Procédé selon l'une des revendications 1 ou 2, caractérisé en ce que la séquence qui sert à contrôler les paramètres de fonctionnement que l'on peut seulement mesurer pendant le processus de contrôle, quand la vanne de dégazage du réservoir est ouverte et à arrêter anormalement le contrôle, comprend les sous-séquences suivantes :
- détermination du gradient de développement de la pression,
- arrêt anormal du contrôle, quand le gradient de développement de la pression se trouve au-dessus d'un seuil.

4. Procédé selon l'une des revendications 1 à 3,
caractérisé en ce que
la séquence, qui sert à contrôler les paramètres de fonctionnement quand la soupape de dégazage du réservoir est ouverte, et à arrêter anormalement le processus, comprend les sous-séquences suivantes :
- mesure d'un signal de marche,
- arrêt anormal du processus, quand la vitesse de la marche du véhicule dépasse un seuil.

5. Procédé selon l'une des revendications 1 à 4,
caractérisé en ce que
la séquence qui sert à contrôler les paramètres de fonctionnement, qui peuvent être mesurés seulement pendant le processus de contrôle, quand la soupape de dégazage du réservoir est fermée, et à arrêter anormalement le processus, comprend les sous-séquences suivantes :
- détermination des modifications de la dépression,
- arrêt anormal du processus, quand les modifications se trouvent au dessus d'un seuil.

6. Procédé selon l'une des revendications 1 à 5,
caractérisé en ce que
la séquence servant à contrôler des paramètres de fonctionnement que l'on peut seulement mesurer pendant le processus de contrôle, quand la soupape de dégazage du réservoir est fermée, et à arrêter anormalement le processus comprend les sous-séquences suivantes :
- détermination des modifications du gradient de réduction de la dépression,
- arrêt anormal du processus , quand le gradient augmente.

7. Procédé selon l'une des revendications 1 à 6,
caractérisé en ce que
dans une phase avec la soupape de dégazage du réservoir fermée en dehors d'une phase de contrôle un contrôle de surpression a lieu quand la soupape d'obturation est en plus fermée et seulement quand lors de ce contrôle on a seulement déterminé une surpression en dessous d'un seuil, et quand il se trouve en arrière de moins d'un intervalle de temps prédéfini on réalise un contrôle selon l'une des revendications 1 à 7.

8. Procédé selon l'une des revendications 1 à 7, caractérisé en ce que dans une phase avec la soupape de dégazage du réservoir fermée après une phase de contrôle a lieu un contrôle de surpression quand la soupape d'obturation est en plus fermée et seulement quand lors de ce contrôle on a déterminé seulement une surpression en dessous d'un seuil et quand il suit la phase de contrôle de moins d'un intervalle de temps prédéfini, on reconnaît pleinement le résultat du contrôle selon l'une des revendications 1 à 7, autrement on reconnaît seulement un résultat, qui indique une grande fuite.

9. Dispositif servant à contrôler l'aptitude à fonctionner d'un système de dégazage de réservoir sur un véhicule.équipé d'un moteur à combustion interne (17), lequel système de dégazage de réservoir présente au dessus d'un réservoir (10) avec un capteur de pression de réservoir (11), un filtre d'adsorption (13), qui est relié au réservoir au moyen d'une conduite de raccordement (12) et une conduite de ventilation (14) que l'on peut fermer par une vanne d'obturation (AV), et possède une soupape de dégazage de réservoir (TEV) dans une conduite (15), qui relie le filtre d'adsorption au tuyau d'aspiration (16) du moteur à combustion interne, avec des moyens pour :
- contrôler des paramètres de fonctionnement du véhicule, y compris du moteur et du système de dégazage du réservoir et mettre anormalement fin au processus, quand les paramètres de fonctionnement définis au préalable ne sont pas atteints, paramètres grâce auxquels il est possible d'obtenir une prévision fiable quant à l'aptitude du système à fonctionner,
- fermer la soupape d'obturation,
- ouvrir la soupape de dégazage du réservoir,
- mesurer la dépression qui s'établit dans le réservoir,
- apprécier l'aptitude du système de dégazage du réservoir à fonctionner sur la base de la pression mesurée dans le réservoir,
lesquels moyens considèrent que le système n'est pas capable de fonctionner à ce moment là et mettent fin au processus, quand le gradient de développement de la dépression se trouve en dessous d'un seuil,
- fermer la vanne de dégazage du réservoir,
- mesurer la dépression qui se développe dans le réservoir,
- estimer que le système n'est pas capable de fonctionner à ce moment là, quand le gradient de réduction de la dépression se trouve au dessus d'un seuil, sinon estimer que le système est susceptible de fonctionner à ce moment là, et
- ouvrir la vanne d'obturation et mettre fin au processus,
caractérisé par :
- des moyens pour contrôler des paramètres de fonctionnement du véhicule que l'on peut seulement mesurer pendant le processus de contrôle, y compris ceux du moteur et du système de dégazage du réservoir, et des moyens pour mettre fin anormalement au processus, quand les valeurs des paramètres de fonctionnement indiquent que les valeurs mesurées de la pression dans le réservoir ne permettent pas de faire de prévision fiable au sujet de l'aptitude du système à fonctionner.

10. Dispositif selon la revendication 9,
caractérisé en ce que
le dispositif de détermination des conditions de fonctionnement présente un système de réglage lambda (22), un capteur de signaux de ralenti (27) et un capteur de signaux de marche (28) et en ce que la commande séquentielle (19) est constituée de telle sorte qu'elle arrête le déroulement du contrôle, quand, la soupape de dégazage du réservoir étant fermée, soit la correction du mélange pauvre se trouve en dessus d'un seuil, soit il n'y a pas de ralenti et le capteur de signaux de marche annonce une vitesse du véhicule qui se trouve au dessus d'un seuil.

11. Procédé selon la revendication 1,
caractérisé en ce que
en cas d'un contrôle du moteur concernant des ratés de combustion, ce processus de contrôle également prend fin anormalement, quand les valeurs mesurées de la pression dans le réservoir ne permettent pas de faire une prévision fiable quand à l'aptitude du système à fonctionner.
